# EUROPÄISCHE PATENTSCHRIFT

(11) **EP 3 723 915 B1**
(45) Veröffentlichungstag und Bekanntmachung des Hinweises auf die Patenterteilung: **23.08.2023**
(21) Anmeldenummer: 18789113.0
(22) Anmeldetag: 17.10.2018
(51) Int. Cl.: B07B 1/12, B07B 1/18, B07B 1/46, D21D 5/16, B01D 29/44

(54) **SIEBHERSTELLVERFAHREN**
SCREEN PRODUCTION METHOD
PROCÉDÉ DE FABRICATION DE TAMIS

(30) Priorität: 13.12.2017 DE 102017129752
(43) Veröffentlichungstag der Anmeldung: 21.10.2020
(73) Patentinhaber: Voith Patent GmbH, 89522 Heidenheim (DE)
(72) Erfinder: BRETTSCHNEIDER, Werner, 88287 Grünkraut (DE); KAUER, Ingo, 88422 Bad Buchau (DE); SCHÄDLER, Melanie, 89547 Gerstetten (DE); BURGER, Ralf, 89558 Böhmenkirch (DE)
(74) Vertreter: Voith Patent GmbH - Patentabteilung
(86) Internationale Anmeldenummer: PCT/EP2018/078317
(87) Internationale Veröffentlichungsnummer: WO 2019/115061

(56) Entgegenhaltungen:
- EP-A1- 0 182 688
- WO-A1-2015/180955
- US-A1- 2002 130 075

## Beschreibung

Die Erfindung betrifft ein Verfahren zur Herstellung einer zylindrischen Siebvorrichtung mit einer Vielzahl von Profilstäben, bei dem mehrere ringförmige, senkrecht zur Zylinderachse verlaufende und voneinander beabstandete Stabhalter an der Außenseite mit randoffenen Aussparungen versehen sind, deren Form den Stabfüßen der Profilstäbe im Wesentlichen komplementär entspricht und die geringfügig größer als die Stabfüße sind und bei dem die Profilstäbe parallel zueinander und parallel zur Zylinderachse in die Aussparungen eingesetzt werden.

Ein bekanntes Beispiel für den Einsatz von zylindrischen Siebvorrichtungen, die nach dem Verfahren dieser Art herstellbar sind, ist das Sortieren von Faserstoffsuspensionen, wie es in Drucksortierern der papiererzeugenden Industrie durchgeführt wird.

Dabei sollen die in der Suspension enthaltenen Fasern durch das Sieb hindurch treten, während die nicht gewünschten festen Bestandteile an dem Spalt abgewiesen und aus der Siebvorrichtung wieder herausgeleitet werden.

Dadurch, dass die Öffnungen eine im Wesentlichen längliche Form haben, also Schlitze oder Spalten sind, werden faserige Teilchen leichter durchgelassen als die kubischen, auch wenn beide Arten in ähnlicher Größenordnung vorliegen sollten.

Mit einer derartigen Sortiertechnologie ist daher ein sehr guter Ausscheidungseffekt von nicht faserigen Störstoffen aus Faserstoffsuspensionen möglich.

Denkbar ist auch ein Einsatz zur Trennung unterschiedlicher Faserbestandteile, der sogenannten Faserfraktionierung. Voraussetzung ist allerdings eine hohe Präzision der Schlitzform auf der ganzen Siebfläche.

Ein mögliches Verfahren, um solche Siebkörbe herzustellen, zeigt die DE 44 35 538 A1, bei der die Profilstäbe durch plastisches Verformen der mit Vertiefungen für die Stäbe vorgesehenen c-förmigen Halteringe eingeklemmt werden. Hierzu werden für derartige Herstellungsverfahren besonders geeignete Profilstäbe verwendet. Mit Hilfe dieses Verfahrens gelang es, die Herstellung wesentlich zu verbilligen. Das Verfahren wird bei Siebkörben verwendet, bei denen die Stäbe am Außenrand der Halteringe eingesetzt werden. Eine solche Anordnung der Stäbe wird gewählt, wenn die Suspension von außen nach innen die Schlitze passieren soll (zentripetale Fahrweise).

Zur Fixierung der Profilstäbe wird dabei der Krümmungsradius der Halteringe vergrößert.

Aus der WO 2015/180955 A1 sowie der US 2002/130075 A1, der ein Verfahren zur Herstellung einer zylindrischen Siebvorrichtung gemäß dem Oberbegriff des Anspruchs 1 offenbart, ist es bekannt, die Profilstäbe über radial von außen einwirkende Kräfte in die Aussparungen zu drücken.

Wichtig ist dabei, dass die Dimensionen der Sieböffnungen mit sehr geringen Toleranzen eingehalten werden. Um sie von Verstopfungen frei zu halten, sind zumeist Räumer erforderlich, die in geringerem Abstand an der Siebfläche vorbei bewegt werden und die hydraulische Impulse erzeugen. Siebvorrichtungen für den Einsatz in Drucksortierern müssen daher sehr präzise gefertigt sein und hohen Belastungen standhalten.

Die Aufgabe der Erfindung ist es den Herstellungsaufwand bei möglichst verbesserter Festigkeit und gesteigerter Lebensdauer der zentripetalen Siebvorrichtung zu vermindern.

Erfindungsgemäß wurde die Aufgabe mit ein Verfahren gemäß Anspruch 1 gelöst.

Da der Stabhalter bereits als Ring vorliegt und in der Regel einstückig ausgeführt ist, vereinfacht sich die Herstellung wesentlich. Neben einer exakten zylindrischen Form ergibt sich dadurch eine hohe Genauigkeit bei den Aussparungen und damit auch den Sieböffnungen.

Infolge des Drückens der Profilstäbe in Richtung der Aussparung der Stabhalter verringert sich der Spielraum zwischen Profilstab und Aussparung, was letztendlich zum Verklemmen beider führt. Neben dem Verklemmen kommt es bei dieser plastischen Verformung auch zu einer Härteverfestigung.

In vielen Fällen kann es genügen, wenn die Fixierung der Profilstäbe in den Aussparungen der Stabhalter ausschließlich über die sich beim radialen Drücken der Profilstäbe einstellende Klemmung erfolgt.

Sollte dies nicht genügen, so müssen die Profilstäbe der Stabhalter in deren Aussparungen durch Schweißen, Kleben o.ä. fixiert werden.

Wenn die Krafteinleitung nur von außen erfolgt, wird die Innenseite der Stabhalter während des radialen Drückens der Profilstäbe keinen Stütz- oder Biegekräften ausgesetzt, was diese schont.

Besonders einfach gestaltet sich die Herstellung, wenn das radiale Drücken der Profilstäbe über mehrere, radial von außen auf die Profilstäbe einwirkende Stempel erfolgt.

Diese Stempel sollten vorzugsweise mit gleichem Abstand über den Umfang der Stabhalter verteilt angeordnet sein. Des Weiteren sollte die, in Richtung der Profilstäbe weisende Pressfläche der Stempel konkav ausgebildet sein, wobei diese Pressfläche mit Vorteil senkrecht zur Zylinderachse von einem Kreisabschnitt gebildet wird, dessen Radius dem Außenradius der fertigen, zylindrischen Siebvorrichtung entspricht. Hierdurch gelingt es während des Pressens die Kräfte zunehmend gleichmäßiger auf die radiale Außenseite der Stabhalter zu verteilen.

Außerdem vereinfacht sich die Anordnung, wenn die Stempel jeweils auf mehrere Profilstäbe einwirken.

Im Interesse einer exakten Führung sollten die Stempel zumindest während des radialen Drückens radial beweglich geführt und/oder axial zur Zylinderachse fixiert sein.

Nachfolgend soll die Erfindung an einem Ausführungsbeispiel näher erläutert werden.

In der beigefügten Zeichnung zeigt:
Figur 1: eine schematische Ansicht eines zylindrischen Siebkorbes;
Figur 2: einen schematischen Querschnitt durch diesen und
Figur 3a+b: die Aussparung 4 mit Profilstab 1 vor und nach dem radialen Drücken.

Die Stabhalter 3 werden als einstückige Ringe beispielsweise mittels Laserschneiden hergestellt. Dies ist die Grundlage für eine hohe Formgenauigkeit des Siebkorbes.

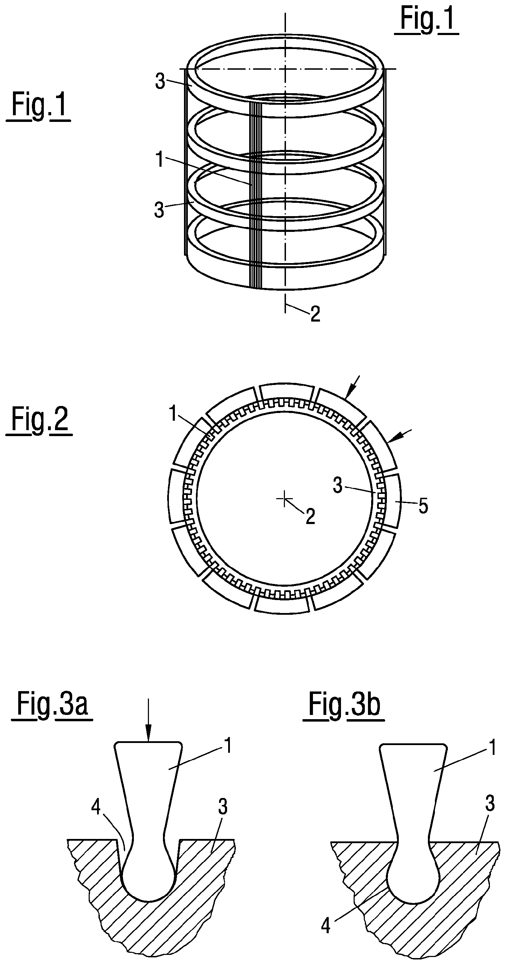

Auf der Außenseite besitzen die Stabhalter 3 eine Vielzahl gleichmäßig verteilt angeordneter Aussparungen 4 für die Profilstäbe 1. Diese Aussparungen 4 bieten gemäß Figur 3a ausreichend Spiel, so dass die Profilstäbe 1 problemlos axial durch diese geschoben werden können.

Im Ergebnis besteht der so vorgefertigte Siebkorb aus parallel zur Zylinderachse 2 verlaufenden Profilstäben 1, die über mehrere axial voneinander beabstandete und senkrecht zur Zylinderachse 2 verlaufende Stabhalter 3 gehalten werden.

Die Sieböffnungen des Siebkorbes werden von den Schlitzen benachbarter Profilstäbe 1 gebildet. In der Praxis haben solche Schlitze oft eine Weite zwischen 0,05 und 2 mm.

Um die Profilstäbe 1 in den Aussparungen 4 zu fixieren, werden diese radial nach innen in die Stabhalter 3 gedrückt. Hierzu werden in der entsprechenden Herstellungsvorrichtung gemäß Figur 2 außerhalb des vormontierten Siebkorbes mehrere Stempel 5 insbesondere gegenüber den Stabhaltern 3 gleichmäßig verteilt angeordnet und dabei insbesondere auf die Zylinderachse 2 des Siebkorbes gerichtet.

Dabei können die axial nebeneinander angeordneten Stempel 5 benachbarter Stabhalter 3 auch als ein gemeinsamer Stempel 5 ausgeführt werden.

Zur Erzeugung eines Formschlusses zwischen Profilstab 1 und Stabhalter 3 werden über die Stempel 5 Druckkräfte auf die Profilstäbe 1 übertragen. Dies muss über den Umfang hinweg möglichst gleichmäßig erfolgen, wobei jeder Stempel 5 jeweils auf mehrere, benachbarte Profilstäbe 1 einwirkt. Hierzu wird die, in Richtung der Profilstäbe 1 weisende Pressfläche aller Stempel 5 jeweils von einem Kreisabschnitt gebildet, dessen Radius dem Außenradius der Siebvorrichtung nach dem Pressvorgang entspricht. Da der von den Profilstäben 1 gebildete Außenradius der Siebvorrichtung vor dem Pressvorgang geringfügig größer als danach ist, besteht am Beginn des Pressvorgangs zwischen den Profilstäben 1 und der Pressfläche im mittleren Teil der Stempels 5 ein kleines Spiel. Dieses Spiel kann beim Beginn des Pressens und den damit verbundenen, geringeren Presskräften in Kauf genommen werden und vermindert sich mit fortschreitender Pressung.

Dies führt ausgehend von einem relativ großen Spiel für das Einführen der Profilstäbe 1 bei der Vormontage des Siebkorbes (Figur 3a) zu einer Verengung der Aussparungen 4 und wegen der komplementären Form zum Festklemmen der Profilstäbe 1 (Figur 3b).

Diese Umformung erfolgt sehr schonend und gleichmäßig, so dass es an den Stabhaltern 3 zu keiner Überbeanspruchung kommt. Auf eine zusätzliche Befestigung der Profilstäbe 1 kann in der Regel verzichtet werden.

Während der Druckbeaufschlagung der Profilstäbe 1 werden die Stempel 5 in Führungsnuten axial und radial geführt.

## Patentansprüche

1. Verfahren zur Herstellung einer zylindrischen Siebvorrichtung mit einer Vielzahl von Profilstäben (1), bei dem mehrere ringförmige, senkrecht zur Zylinderachse (2) verlaufende und voneinander beabstandete Stabhalter (3) an der Außenseite mit randoffenen Aussparungen (4) versehen sind, deren Form den Stabfüßen der Profilstäbe (1) im Wesentlichen komplementär entspricht und die geringfügig größer als die Stabfüße sind und bei dem die Profilstäbe (1) parallel zueinander und parallel zur Zylinderachse (2) in die Aussparungen (4) eingesetzt werden, wobei die Profilstäbe (1) über radial von außen auf die Profilstäbe (1) einwirkende Kräfte bis zum Formschluss in die Aussparungen (4) gedrückt werden, wobei das radiale Drücken über mehrere, radial von außen auf die Profilstäbe (1) einwirkende Stempel (5) erfolgt, **dadurch gekennzeichnet, dass** die Stempel über den Umfang der Stabhalter (3) verteilt angeordnet sind.

2. Verfahren nach Anspruch 1, **dadurch gekennzeichnet, dass** die Fixierung der Profilstäbe (1) in den Aussparungen (4) der Stabhalter (3) ausschließlich über die sich beim radialen Drücken der Profilstäbe (1) einstellende Klemmung erfolgt.

3. Verfahren nach Anspruch 1 oder 2, **dadurch gekennzeichnet, dass** die Innenseite der Stabhalter (3) während des radialen Drückens der Profilstäbe (1) keinen Stütz- oder Biegekräften ausgesetzt wird.

4. Verfahren nach einem der vorhergehenden Ansprüche, **dadurch gekennzeichnet, dass** die Stempel (5) mit gleichem Abstand über den Umfang der Stabhalter (3) verteilt angeordnet sind.

5. Verfahren nach einem der vorhergehenden Ansprüche, **dadurch gekennzeichnet, dass** die Stempel (5) jeweils auf mehrere Profilstäbe (1) einwirken.

6. Verfahren nach einem der vorhergehenden Ansprüche, **dadurch gekennzeichnet, dass** die Stempel (5) radial beweglich geführt sind.

7. Verfahren nach Anspruch 6, **dadurch gekennzeichnet, dass** die Stempel (5) axial zur Zylinderachse (2)fixiert sind.

8. Verfahren nach einem der vorhergehenden Ansprüche, **dadurch gekennzeichnet, dass** die, in Richtung der Profilstäbe (1) weisende Pressfläche der Stempel (5) konkav ausgebildet ist.

9. Verfahren nach Anspruch 8, **dadurch gekennzeichnet, dass** die Pressfläche jedes Stempels (5) senkrecht zur Zylinderachse (2) von einem Kreisabschnitt gebildet wird, dessen Radius dem Außenradius der fertigen Siebvorrichtung entspricht.

## Claims

1. Method for producing a cylindrical screen device with a plurality of profiled bars (1), in which a plurality of annular, spaced-apart bar holders (3) extending perpendicularly to the cylinder axis (2) are provided on the outer side with open-edge recesses (4) whose shape corresponds to the bar feet of the profiled bars (1) in a substantially complementary manner and which are slightly larger than the bar feet, and in which the profiled bars (1) are inserted into the recesses (4) parallel to one another and parallel to the cylinder axis (2), wherein the profiled bars (1) are pressed into the recesses (4) via forces acting radially on the profiled bars (1) from outside until a form fit is produced, wherein the radial pressing occurs via a plurality of punches (5) which act radially on the profiled bars (1) from outside, **characterized in that** the punches are arranged so as to be distributed over the circumference of the bar holders (3).

2. Method according to Claim 1, **characterized in that** the fixing of the profiled bars (1) in the recesses (4) of the bar holders (3) occurs exclusively via the clamping being produced during the radial pressing of the profiled bars (1).

3. Method according to Claim 1 or 2, **characterized in that,** during the radial pressing of the profiled bars (1), the inner side of the bar holders (3) is not exposed to any supporting or bending forces.

4. Method according to one of the preceding claims, **characterized in that** the punches (5) are arranged so as to be distributed with the same spacing over the circumference of the bar holders (3).

5. Method according to one of the preceding claims, **characterized in that** the punches (5) each act on a plurality of profiled bars (1).

6. Method according to one of the preceding claims, **characterized in that** the punches (5) are guided so as to be radially movable.

7. Method according to Claim 6, **characterized in that** the punches (5) are fixed axially with respect to the cylinder axis (2).

8. Method according to one of the preceding claims, **characterized in that** the pressing surface of the punches (5) that faces in the direction of the profiled bars (1) is designed to be concave.

9. Method according to Claim 8, **characterized in that** the pressing surface of each punch (5) is formed perpendicularly to the cylinder axis (2) by a segment of a circle whose radius corresponds to the outer radius of the finished screen device.

## Revendications

1. Procédé de fabrication d'un dispositif de tamisage cylindrique avec une pluralité de barres profilées (1), dans lequel plusieurs supports de barres (3) de forme annulaire, s'étendant perpendiculairement à l'axe du cylindre (2) et espacés les uns des autres, sont pourvus sur le côté extérieur d'évidements (4) ouverts sur le bord, dont la forme correspond de manière essentiellement complémentaire aux pieds de barre des barres profilées (1) et qui sont légèrement plus grands que les pieds de barre, et dans lequel les barres profilées (1) sont insérées dans les évidements (4) parallèlement les unes aux autres et parallèlement à l'axe du cylindre (2), les barres profilées (1) étant pressées dans les évidements (4) par l'intermédiaire de forces agissant radialement de l'extérieur sur les barres profilées (1) jusqu'à la complémentarité de forme, la pression radiale s'effectuant par l'intermédiaire de plusieurs poinçons (5) agissant radialement de l'extérieur sur les barres profilées (1), **caractérisé en ce que** les poinçons sont agencés de manière répartie sur la périphérie des supports de barres (3).

2. Procédé selon la revendication 1, **caractérisé en ce que** la fixation des barres profilées (1) dans les évidements (4) des supports de barres (3) s'effectue exclusivement par le serrage qui s'établit lors de la pression radiale des barres profilées (1).

3. Procédé selon la revendication 1 ou 2, **caractérisé en ce que** le côté intérieur des supports de barres (3) n'est exposé à aucune force de soutien ou de flexion pendant la pression radiale des barres profilées (1).

4. Procédé selon l'une quelconque des revendications précédentes, **caractérisé en ce que** les poinçons (5) sont agencés de manière répartie avec une distance égale sur le périmètre des supports de barres (3).

5. Procédé selon l'une quelconque des revendications précédentes, **caractérisé en ce que** les poinçons (5) agissent chacun sur plusieurs barres profilées (1).

6. Procédé selon l'une quelconque des revendications précédentes, **caractérisé en ce que** les poinçons (5) sont guidés de manière mobile radialement.

7. Procédé selon la revendication 6, **caractérisé en ce que** les poinçons (5) sont fixés axialement par rapport à l'axe du cylindre (2).

8. Procédé selon l'une quelconque des revendications précédentes, **caractérisé en ce que** la surface de pressage des poinçons (5), orientée en direction des barres profilées (1), est configurée sous forme concave.

9. Procédé selon la revendication 8, **caractérisé en ce que** la surface de pressage de chaque poinçon (5) est formée, perpendiculairement à l'axe du cylindre (2), par un segment de cercle dont le rayon correspond au rayon extérieur du dispositif de criblage terminé.
